# EUROPEAN PATENT SPECIFICATION

(11) **EP 3 509 430 B1**
(45) Date of publication and mention of the grant of the patent: **04.08.2021**
(21) Application number: 17781165.0
(22) Date of filing: 01.09.2017
(51) Int. Cl.: A23L 2/52, A23L 2/56, A23L 33/105, A23L 2/02

(54) **HERBAL BEVERAGE AND METHOD OF ITS PREPARATION**
PFLANZLICHES GETRÄNK UND VERFAHREN ZU DESSEN HERSTELLUNG
BOISSON À BASE DE PLANTES ET SON PROCÉDÉ DE PRÉPARATION

(30) Priority: 09.09.2016 HR 20161161
(43) Date of publication of application: 17.07.2019
(73) Proprietor: Petricic, Ante, 82319 Starnberg (DE); Petricic, Josip, 82319 Starnberg (DE); Petricic, Olga, 82319 Starnberg (DE)
(72) Inventor: PETRICIC, Olga, 82319 Starnberg (DE)
(74) Representative: Vukina, Sanja
(86) International application number: PCT/HR2017/000013
(87) International publication number: WO 2018/046975

(56) References cited:
- EP-A1- 3 058 946
- WO-A1-2012/033422
- WO-A1-2015/107514
- WO-A2-2011/029077
- RU-C1- 2 421 102
- US-A1- 2013 224 361

## Description

### Field of the invention

The present invention relates to the field of dietary and health beverages. It is known that different natural foodstuffs, fruits and vegetables in particular, are rich in vitamins, minerals, fibre, and that they have an important impact on the health of the body and protect the body from diseases. Among such foodstuffs are beetroot, lemon, ginger, honey, culinary herbs. Beverages based on such foodstuffs are gladly used and consumed with the purpose of maintaining and improving the health of the body.

### Technical problem

The objective of the inventors was to create a beverage which will be used as a healthy beverage for improvement of general mental and physical health of the consumer, rich in natural vitamins and minerals necessary for daily consumption and maintenance of the health of the body, acceptable in taste, composed of natural ingredients which will be stable under normal use conditions for a longer period of time (6 months), without the need for the beverage to be held in special cooling devices.

The inventors' intention was to create a beverage containing as many natural ingredients with positive influence on the body as possible, which can be simultaneously used without mutual negative effects, acceptable in taste for the majority of consumers, where the ingredients mutually interact in a way that achieves natural stability of the beverage for a longer period of time, at room temperature.

### Prior art

The beverage which is the subject matter of the present invention contains naturally healthy foodstuffs: beetroot, honey, ginger, lemon, walnut, yeast, butter, salt, sweet fennel, thyme, daisy or chamomile flowers, beech tree leaves or sesame oil, coriander and green peppercorn. The preparation of the beverage consists of the addition of the chosen ingredients in a strictly determined order.

Each of the above foodstuffs is known in traditional medicine for their ability to contribute to better functioning of the body.

It is known that beetroot contains an abundance of minerals, in particular potassium, sodium and calcium, and also manganese, iron, copper, zinc, cobalt, iodine, sulphur, bromine, rubidium, caesium, strontium and lithium, and as for vitamins, vitamin C is the most represented, followed by vitamin B1, B2, niacin, provitamin A and vitamin P. It is also rich in folic acid, betanin and betaine, which are important for blood vessels, liver and gallbladder function, blood pressure regulation and lowering of cholesterol levels, and stimulate matter exchange.

Lemon contains an antioxidant with anti-inflammatory properties. Saponins, found in lemons, help fight bacteria. Citric acid stimulates functioning of enzymes and separates toxins in the blood, and it is helpful with fighting diseases of the urinary system and with passing gallstones. Lemon contains large doses of ascorbic acid (vitamin C) which is a natural remedy for wounds and inflammatory processes. It has a positive impact on the metabolism of persons suffering from diabetes and it is used as treatment for blood clotting and inflammation.

Ginger is rich in essential oils, potassium, manganese, copper, magnesium and vitamin B. Ginger is, among other things, used to relieve pain, treat arthritis, reduce inflammation, and also to aid weight loss due to the fact that it boosts metabolism.

Lime honey is used for treatment of bladder and kidney diseases, as well as diseases of respiratory organs. It boosts metabolism and helps with the process of removing toxic substances from the body.

Daisy flowers are used in treatment of bronchitis and chest pains, inflammations of intestines and stomach, but also in case of liver and kidney diseases, irregular menstrual cycle, to relieve abdominal pain and cramps, and in case of rheumatism, gout and arthritis.

Thyme is a plant which is used in herbal medicine to treat bacterial infections of the skin, urinary and respiratory system and indigestion.

Fennel is used in natural medicine as a means against indigestion, cramps, as a medicine against cough and chest pains.

Coriander is rich in essential oils, proteins, vitamin C and organic acids, and its oil contains around 70 percent of linalool, as well as pineol, borneol, limonene and geraniol.

Yeast is a valuable source of minerals and vitamins - iron, magnesium, phosphorus, potassium, zinc, selenium, folic acid, thiamine, riboflavin, niacin and pantothenic acid. It is rich in chromium and vitamins B1, B2, B6, nicotinic acid, and it contains small quantities of vitamin B12.

Walnut contains antioxidants, quality fatty acids, iron, calcium, magnesium, phosphorus, zinc, manganese, selenium, vitamins B, E and K. Walnuts contain large quantities of alpha-linolenic acid, which protects from inflammation and calcification of blood vessels, reduces heart attack risks and normalizes blood pressure. It is important for cognitive capacities and normal development of the body. Omega-3 fatty acids in walnuts have an anti-inflammatory effect, which reduces the risk of development of coronary diseases, heart attacks, strokes, hypertension. It is known that omega-3 helps reduce the symptoms of depression, hyperactivity and Alzheimer's disease.

Chamomile flowers contain more than 1 percent of essential oil, between 2,5 and 3 percent of apigenin, tannins, resins, flavonoids, coumarin, organic acids, etc.. Main ingredients of the oil are chamazulene, alpha-bisabolol, bisabolol oxides, farnesene and others. Chamomile is used to relieve pain and against inflammations, insomnia, nervousness, indigestion, skin diseases.

Sesame oil is used against inflammations and as an antiseptic and an analgesic for skin diseases, gum diseases and various other conditions, it is a strong antioxidant (a substance which reduces the presence of damaging chemicals in the body), rich in polyunsaturated fats and a great source of vitamin E and minerals.

Peppercorn contains essential oils phellandrene, caryophyllene and sesquiterpene, alkaloid piperine, starch, resins and some fatty oils. Due to its healing properties, it is regarded as a protector of the entire body, and, in particular, the digestive system. It improves functioning of the stomach by irritating its lining and stimulating digestion and, at the same time, it destroys various harmful microorganisms in food.

The prior art contains different kinds of beverages based on beetroot, other vegetables and spices, as well as methods for preparation of those beverages.

Patent application EP3058946 A1 relates to a low alcohol or non-alcoholic preparation comprising water, sweeteners and at least 12, preferably 18, more preferably 24 herbs or herbal extracts wherein the herbs or herbal extracts are selected from a group consisting of wormwood, marshmallow, angelica, true angostura, anise , stemansis, mugwort, orange peel, green tea, cardamon, safflower, cloves, centaury, chamomile, cinnamon bark, coriander, cubeben pepper, att (root), dwarf elder root, fennel, galangal root, gentian, alantro root. artichoke, peppercorns (black), orris root, watt-nat leaves, licorice, liquorice juice, lemon balm, bitter clover, mace, mace, nutmeg, myrrha, sage, savory, quenelle, wild thyme, thyme, tormentil, redroot, cedar root and ginger or their extracts. Preferably, such a preparation is a Swedish bittersweet. Furthermore, the invention relates to a method for producing a low-alcohol or alcohol-free preparation, which comprises herbs or herbal extracts from the above-mentioned group.

Contrary to the patent application WO2018046975, patent application EP3058946 contains quite different types of herbs, and is not particularly based on beetroot, and does not contain yeast, chopped or ground walnuts, butter, beech tree leaves or sesame oil, honey, salt, lemon juice. A beverage from patent application EP3058946 apparently tends to taste like Swedish bittersweet, but without or with a minimum percentage of alcohol. The flavour of the beverage from the present patent application is quite different and does not have a sweet bitter taste as the beverage of patent application EP3058946. The method of preparation of the beverage from EP3058946 is also different, and the reason is that the purpose of beverage was to create Swedish bittersweet without alcohol. The aim of the herbal beverage from this patent WO2018046975 was to make a beverage containing medicinal herbs and healthy ingredients selected by the inventor, which are temperature-sensitive and it is difficult to achieve the stability of the product, which will be kept stable at room temperature for at least 6 months and at the same time with taste and appearance meets the requirements of inventors and users.

Patent application WO2008098273 A1 discloses a juice which contains a minimum of 30% of beetroot juice and 30% lemon juice. Document KR20000002126 A relates to beetroot juice containing 85-89,9% of extraction liquid of beetroot, followed by 10-14,9% of customary additives, such as polydextrose, oligosaccharide, fructose, citric acid, etc.; 0,1-5% of vitamin C and 0,0001-0,1% of beta-cyclodextrin.

Document US5145678 A relates to a method of reducing cholesterol levels by consuming a mixture of beetroot juice, lemon juice and honey in the ratio of 1 : 1 : 0,4.

Document RU2333703 C1 relates to a preparation process for a mixture of beetroot juice, which includes grinding, blanching, juice extraction and addition of a stabilizing agent. According to the said invention, beetroot is ground to particles which are 6x3x1mm in size, while cherry fibres are used as a stabilizing agent.

Document RU2421102 C1 discloses a process of preparation of a vegetable beverage, containing beetroot, celery, dandelion root, water, salt and citric acid.

Patent No. DE10314608 B3 discloses a process of preparation of beetroot juice, where fresh beetroot is washed, industrially chopped into small pieces, followed by adding citric acid, fresh lemon, peppermint powder, chilli, garlic, salt and water, the mixture is stirred for 60-90 minutes and is then filtered through a 100 micron sieve.

The prior art does not contain a beverage made of natural ingredients which are contained in the beverage which is the subject matter of the present invention, and it does not contain the method of preparation described herein.

### Description of the essence of the invention

The objective of the inventors was to produce a beverage made of natural ingredients, primarily of organic origin, which can mutually interact without negative effects, which beverage improves general mental and physical health of the consumer and is acceptable in taste for the majority of consumers, and is stable for a longer period of time without the use of any additives.

By experimenting, the inventors have found that precisely the combination of the following plants: beetroot, ginger, walnut, yeast, butter, salt, honey (especially lime honey), lemon (juice), sweet fennel, thyme, daisy or chamomile flowers, beech tree leaves or sesame oil, coriander and peppercorn, particularly green peppercorn, with addition of water or other liquid, gives a product which, if certain ratios are applied, has the desired characteristics related with its consumption, production and keeping.

One would expect that mixing these natural ingredients together, without the addition of artificial preservatives, would create a product which is not stable for a longer period of time at room temperature, especially due to ingredients such as yeast and butter.

Contrary to expectations, beverage obtained by mixing these ingredients together is stable for up to 6 months at room temperature, provided that it is not subjected to direct sunlight. Crucial for maintaining the stability of the product is the composition of the beverage and the order in which the ingredients are added.

The order in which the ingredients are added into the water/liquid must be strictly maintained, because it is crucial for achieving stability and interaction of all added ingredients, and thus for achieving an impact on health.

### Detailed description of at least one way of carrying out the invention

The method of preparation of the beverage:
Fresh beetroot, preferably 100% ecologically farmed beetroot, peeled and chopped into small pieces, is added into the water, the water is heated on low heat at a temperature of up to 85°C, and the beetroot puree is slowly stirred in the liquid.

Following the above, other ingredients are added in the following order: ground green peppercorn, yeast, chopped coriander, chopped or ground walnuts, softened butter, chopped thyme, beech tree leaves or sesame oil (preferably oil from the first press), chopped daisy of chamomile flowers, ginger chopped to small pieces, chopped fennel, honey, preferably lime honey, salt and lemon juice.

The ratio of the added ingredients is as follows:

| | |
|---|---|
| • water | up to 60% |
| • fresh beetroot | up to 40% |
| • lemon juice | up to 7 % |
| • ginger | up to 4 % |
| • honey | up to 4 % |
| • walnuts | up to 1,5 % |
| • yeast | up to 0,1 % |
| • butter | up to 0,1 % |
| • salt | up to 0,1 % |
| • sweet fennel | up to 0,1 % |
| • thyme | up to 0,1 % |
| • daisy or chamomile flowers | up to 0,05 % |
| • beech tree leaves or sesame oil | up to 0,05 % |
| • coriander | up to 0,05 % |
| • green peppercorn | up to 0,05 % |

It is important that the beverage is slowly stirred after adding each of the ingredients, in order for all of the ingredients to be evenly mixed together, which will enable their mutual interaction in an optimal manner. During the process of stirring and adding of the ingredients, the beverage is heated on low heat at a temperature of up to 85°C, for a 5 minute period.

After all of the ingredients have been added, the beverage is blended in a blender/mixer with knives, and is thereafter strained in order to obtain a smooth mass. After that, the beverage is cooled at room temperature and, after it has cooled and set, is stirred one more time and then poured into sterile containers intended for storage of foodstuffs and beverages.

The above method for preparation of this beverage will result in the stability of the beverage for a longer period of time, up to 6 months, at room temperature, without the use of any additives. It is sufficient to store the beverage in a cooler place, such as in a cupboard with no sun exposure, without the need for it to be additionally cooled in a cooling device.

After opening of the container, the beverage should be consumed within 7 days. The level of sterility of the container into which the beverage is stored should be in compliance with the legislation applicable to the containers intended for storage of foodstuffs and beverages.

1000 ml of the beverage in accordance with the above described method contains the following ingredients:

### Example I

| | |
|---|---|
| water | 583,185 ml |
| chopped fresh beetroot | 333,300 ml |
| lemon juice | 41,650 ml |
| ginger | 18,350 g |
| lime honey | 8,350 ml |
| walnuts | 7,000 g |
| yeast | 1,665 g |
| butter | 1,665 g |
| salt | 1,650 g |
| sweet fennel | 1,165 g |
| thyme | 1,000 g |
| daisy flowers | 0,475 g |
| beech tree leaves | 0,335 g |
| coriander | 0,105 g |
| green peppercorn | 0,105 g |

### Example II

| | |
|---|---|
| water | 583,185 ml |
| chopped fresh beetroot | 333,300 ml |
| lemon juice | 41,650 ml |
| ginger | 18,350g |
| lime honey | 8,350 ml |
| walnuts | 7,000 g |
| yeast | 1,665 g |
| butter | 1,665 g |
| salt | 1,650 g |
| sweet fennel | 1,165 g |
| thyme | 1,000 g |
| chamomile flowers | 0,475 g |
| sesame oil | 0,335 ml |
| coriander | 0,105 g |
| green peppercorn | 0,105 g |

### Application of the invention

The beverage contains natural ingredients, each of which has numerous medicinal properties, and it achieves the desired interaction of the ingredients having an efficacious effect on the body, especially regarding normalization of blood pressure, boosting of the body's immune system and increase of the body's physical and mental strength and stability. The ingredients have been chosen so that they do not suppress each other and cancel each other's individual positive effects and so that they do not mutually interact by yielding negative effects, but have positive mutual interaction, are acceptable or even very good in taste and stable for a longer period of time (6 months) at room temperature, without the addition of any preservatives or additives.

Medicinal properties of this beverage manifest in improvement of general mental and physical health of its consumer. It is recommended that 1 glass of approximately 200 ml is consumed on a daily basis, before a meal. The beverage can be consumed in smaller quantities, several times a day. It is best to consume it in 3 portions, three times a day, before meals.

Regular consumption of the beverage gives energy and refreshes the mind and the body, it boosts the immune system, improves sleep and has positive impact on liver function, metabolism, blood test results, cardiovascular system, as well as blood pressure regulation.

This beverage is acceptable in taste for the majority of people, it is easily consumed and readily absorbed in the body.

## Claims

1. Herbal beverage, **characterized in that** it contains water, fresh beetroot, green peppercorn, yeast, coriander, walnut, butter, thyme, daisy or chamomile flowers, beech tree leaves or sesame oil, ginger, fennel, honey, salt, lemon juice.

2. Herbal beverage according to claim 1, **characterized in that** it contains water, fresh beetroot, green peppercorn, yeast, coriander, walnut, butter, thyme, daisy flowers, beech tree leaves, ginger, fennel, honey, salt, lemon juice.

3. Herbal beverage according to claim 1, **characterized in that** it contains water, fresh beetroot, green peppercorn, yeast, coriander, walnut, butter, thyme, chamomile flowers, sesame oil, ginger, fennel, honey, salt, lemon juice.

4. Herbal beverage according to claim 1, **characterized in that** the ratio of the listed ingredients contained in the beverage is the following:
| | |
|---|---|
| • water | up to 60% |
| • fresh beetroot | up to 40% |
| • lemon juice | up to 7 % |
| • ginger | up to 4 % |
| • honey | up to 4 % |
| • walnuts | up to 1,5 % |
| • yeast | up to 0,1 % |
| • butter | up to 0,1 % |
| • salt | up to 0,1 % |
| • sweet fennel | up to 0,1 % |
| • thyme | up to 0,1 % |
| • daisy or chamomile flowers | up to 0,05 % |
| • beech tree leaves or sesame oil | up to 0,05 % |
| • coriander | up to 0,05 % |
| • green peppercorn | up to 0,05 % |

5. Method for the preparation of herbal beverage described in claim 1, **characterized in that** the ingredients are added in the following strictly determined order: water, fresh beetroot, green peppercorn, yeast, coriander, walnuts, butter, thyme, beech tree leaves or sesame oil, daisy or chamomile flowers, ginger, fennel, honey, salt, lemon juice; wherein the beverage is stirred after adding each of the ingredients, while being heated; after which the beverage is blended, strained and cooled; and is poured, while stirring, into sterilized containers.

6. Method for the preparation of herbal beverage according to claim 5, **characterized in that** the heating is conducted at a temperature of up to 85°C, for a period not longer than 5 minutes.

7. Method for the preparation of herbal beverage according to claim 5, **characterized in that** the cooling of the beverage is conducted at room temperature until it reaches the temperature of 25°C and then poured into sterile containers.

8. Method for the preparation of herbal beverage according to claim 5, **characterized in that** that a beverage maintains stable consistency at the room temperature for the period of up to 6 months.

## Patentansprüche

1. Kräutergetränk, **dadurch gekennzeichnet, dass** es Wasser, frische Rote Beete, grünes Pfefferkorn, Hefe, Koriander, Walnuss, Butter, Thymian, Gänseblümchen- oder Kamillenblüten, Buchenblätter oder Sesamöl, Ingwer, Fenchel, Honig, Salz, Zitronensaft enthält.

2. Kräutergetränk nach Anspruch 1, **dadurch gekennzeichnet, dass** es Wasser, frische Rote Beete, grünes Pfefferkorn, Hefe, Koriander, Walnuss, Butter, Thymian, Gänseblümchenblüten, Buchenblätter, Ingwer, Fenchel, Honig, Salz, Zitronensaft enthält.

3. Kräutergetränk nach Anspruch 1, **dadurch gekennzeichnet, dass** es Wasser, frische Rote Beete, grünes Pfefferkorn Hefe, Koriander, Walnuss, Butter, Thymian, Kamillenblüten, Sesamöl, Ingwer, Fenchel, Honig, Salz, Zitronensaft enthält.

4. Kräutergetränk nach Anspruch 1, **dadurch gekennzeichnet, dass** das Mengenverhältnis der angeführten Zutaten im Getränk wie folgt ist:
| | |
|---|---|
| • Wasser | bis zu 60% |
| • frische Rote Beete | bis zu 40% |
| • Zitronensaft | bis zu 7% |
| • Ingwer | bis zu 4% |
| • Honig | bis zu 4% |
| • Walnuss | bis zu 1,5% |
| • Hefe | bis zu 0,1% |
| • Butter | bis zu 0,1% |
| • Salz | bis zu 0,1% |
| • süßer Fenchel | bis zu 0,1% |
| • Thymian | bis zu 0,1% |
| • Gänseblümchen- oder Kamillenblüten | bis zu 0,05% |
| • Buchenblätter oder Sesamöl | bis zu 0,05% |
| • Koriander | bis zu 0,05% |
| • grünes Pfefferkorn | bis zu 0,05% |

5. Verfahren zur Zubereitung des in Anspruch 1 beschriebenen Kräutergetränks, **dadurch gekennzeichnet, dass** die Zutaten in der folgenden genau festgelegten Reihenfolge hinzugefügt werden: Wasser, frische Rote Beete, grünes Pfefferkorn, Hefe, Koriander, Walnuss, Butter, Thymian, Buchenblätter oder Sesamöl, Gänseblümchen- oder Kamillenblüten, Ingwer, Fenchel, Honig, Salz, Zitronensaft; wobei, nachdem jede einzelne Zutat hinzugefügt worden ist, das Getränk gerührt und dabei erhitzt wird; wonach das Getränk vermischt, abgeseiht und abgekühlt; und unter Rühren in sterilisierte Behältnisse abgefüllt wird.

6. Verfahren zur Zubereitung des Kräutergetränks nach Anspruch 5, **dadurch gekennzeichnet, dass** das Erhitzen bei einer Temperatur von bis zu 85°C in einem Zeitraum von nicht länger als 5 Minuten erfolgt.

7. Verfahren zur Zubereitung des Kräutergetränks nach Anspruch 5, **dadurch gekennzeichnet, dass** das Abkühlen des Getränks bei Raumtemperatur erfolgt bis es die Temperatur von 25°C erreicht, und dann wird es in sterile Behältnisse abgefüllt.

8. Verfahren zur Zubereitung des Kräutergetränks nach Anspruch 5, **dadurch gekennzeichnet, dass** das Getränk bei Raumtemperatur eine stabile Konsistenz für bis zu 6 Monate beibehält.

## Revendications

1. Boisson à base de plantes, **caractérisée en ce qu'**elle contient eau, betterave fraîche, poivre vert, levure, coriandre, noix, beurre, thym, fleurs de marguerite ou de camomille, feuilles de hêtre ou huile de sésame, gingembre, fenouil, miel, sel, jus de citron.

2. Boisson à base de plantes suivant la revendication 1, **caractérisée en ce qu'**elle contient eau, betterave fraîche, poivre vert, levure, coriandre, noix, beurre, thym, fleurs de marguerite, feuilles de hêtre, gingembre, fenouil, miel, sel, jus de citron.

3. Boisson à base de plantes suivant la revendication 1, **caractérisée en ce qu'**elle contient eau, betterave fraîche, poivre vert, levure, coriandre, noix, beurre, thym, fleurs de camomille, huile de sésame, gingembre, fenouil, miel, sel, jus de citron.

4. Boisson à base de plantes suivant la revendication 1, **caractérisée en ce que** la proportion des ingrédients énumérés contenus dans la boisson est la suivante :
| | |
|---|---|
| • eau | jusqu'à 60 % |
| • betterave fraîche | jusqu'à 40 % |
| • jus de citron | jusqu'à 7 % |
| • gingembre | jusqu'à 4 % |
| • miel | jusqu'à 4 % |
| • noix | jusqu'à 1,5 % |
| • levure | jusqu'à 0,1 % |
| • beurre | jusqu'à 0,1 % |
| • sel | jusqu'à 0,1 % |
| • fenouil doux | jusqu'à 0,1 % |
| • thym | jusqu'à 0,1 % |
| • fleurs de marguerite ou de camomille | jusqu'à 0,05 % |
| • feuilles de hêtre ou huile de sésame | jusqu'à 0,05 % |
| • coriandre | jusqu'à 0,05 % |
| • poivre vert | jusqu'à 0,05 % |

5. Méthode de préparation de la boisson à base de plantes décrite dans la revendication 1, **caractérisée en ce que** les ingrédients sont ajoutés dans l'ordre suivant strictement déterminé: eau, betterave fraîche, poivre vert, levure, coriandre, noix, beurre, thym, feuilles de hêtre ou huile de sésame, fleurs de marguerite ou de camomille, gingembre, fenouil, miel, sel, jus de citron; où la boisson est remuée après l'ajout de chaque ingrédient, tout en étant chauffée; suite à quoi la boisson est mixée, filtrée et refroidie; puis versée, tout en étant mélangée, dans des récipients stérilisés.

6. Méthode de préparation de la boisson à base de plantes suivant la revendication 5, **caractérisée en ce que** le chauffage s'effectue à une température allant jusqu'à 85 °C, pendant 5 minutes au maximum.

7. Méthode de préparation de la boisson à base de plantes suivant la revendication 5, **caractérisée en ce que** le refroidissement de la boisson s'effectue à température ambiante jusqu'à ce que la boisson atteigne la température de 25 °C puis elle est versée dans des récipients stérilisés.

8. Méthode de préparation de la boisson à base de plantes suivant la revendication 5, **caractérisée en ce que** la boisson maintient une consistance stable à température ambiante pendant une durée maximale de 6 mois.
